# EUROPÄISCHE PATENTANMELDUNG

(11) **EP 2 536 127 A2**
(43) Veröffentlichungstag der Anmeldung: **19.12.2012**
(21) Anmeldenummer: 12004002.7
(22) Anmeldetag: 23.05.2012
(51) Int. Cl.: H04N 5/235

(54) **Verfahren zur bildbasierten automatischen Belichtungskorrektur**

(30) Priorität: 15.06.2011 DE 102011104198
(71) Anmelder: ABB AG, 68309 Mannheim (DE)
(72) Erfinder: Bigalke, Olaf, 58638 Iserlohn (DE); Platte, Jörg, 44149 Dortmund (DE); Kleine-Cosack, Christian, 44229 Dortmund (DE)

(57) **Zusammenfassung**

Es wird ein Verfahren zur bildbasierten automatischen Belichtungskorrektur eines Haus-Kommunikationssystems vorgeschlagen, welches als Systemkomponenten eine Türstation (4) und mindestens eine über einen Bus (15) daran angeschlossene Wohnungsstation (1) aufweist,
• wobei eine Kamera (5) der Türstation (4) Bilder von Personen aufnimmt, welche sich vor der Türstation aufhalten,
• wobei diese Bilder im Display (2) der Wohnungsstation (1) zur Anzeige gebracht werden,
• wobei das von der Kamera (5) erzeugte analoge oder digitale Bildsignal (BS) mit Hilfe eines Regionsdetektors (10) ausgewertet wird, welcher ein oder mehrere relevante Bildbereiche identifiziert,
• wobei ein Helligkeitsmesswerterzeuger (11) die Belichtungsqualität mindestens eines interessierenden Bildbereichs auf Basis der Ergebnisse des Regionsdetektors (10) ermittelt,
• wobei eine Regeleinheit (8) aus einem vorgegebenen Sollwert (SW) und dem vom Helligkeitsmesswerterzeuger (11) erzeugten und gelieferten Istwert (lW) Stellgrößen (SG) ermittelt, welche die Belichtungsparameter der Kamera (5) iterativ während der Bildaufnahme optimiert.

## Beschreibung

Die Erfindung betrifft ein Verfahren zur bildbasierten automatischen Belichtungskorrektur im Zusammenhang mit bei Haus-Kommunikationssystemen gelieferten Video-Informationen respektive Bildsignalen.

Bei Haus-Kommunikationssystemen ist es im Zusammenhang mit der Übertragung eines von einer Kamera einer Türstation aufgenommenen Bildes an ein Display mindestens einer Wohnungsstation allgemein üblich, eine automatische Belichtungseinstellung auf Basis der durchschnittlichen Helligkeit über das gesamte Bild vorzunehmen, um derart die bei unterschiedlichen Tageszeiten und Witterungsbedingungen auftretenden Helligkeitsunterschiede zu kompensieren (Morgen, Mittagsonne, leichte/starke Bewölkung, Abend, Nacht). Die Belichtungsempfindlichkeit wird unter der Grundannahme berechnet, dass das gesamte Bild eine bestimmte durchschnittliche Helligkeit, beispielsweise eine Helligkeit von 18%, aufweist. Der gesamte Bildbereich wird bei der Berechnung mit gleicher Gewichtung berücksichtigt.

Die Grundannahme, dass die optimale Belichtungseinstellung für eine Aufnahme auf Basis der durchschnittlichen Helligkeit über den gesamten Bildbereich ermittelt werden kann, ist in typischen Einsatzszenarien von Türstationen (Außenstationen) von Haus-Kommunikationssystemen nicht gegeben. In diesen Situationen steht beispielsweise eine Person vor der Außenstation dicht an einer Häuserwand in einem schattigen Bereich, der Bildhintergrund ist hingegen direkt beleuchtet und im Bild deutlich heller. Auch Gegenlichtsituationen sind häufig anzutreffen und führen zu einem ähnlichen Effekt. Durch diese stark unterschiedlichen Beleuchtungsgegebenheiten für Vordergrund ― mit einer Person ― und Hintergrund führt eine allgemein übliche automatische Belichtungsanpassung in der Praxis zu unbefriedigenden Ergebnissen. Das Resultat ist eine deutliche Kontrastverminderung in der Darstellung der Person auf dem übertragenen Videobild allgemein bekannter Türstationen.

Der Erfindung liegt die Aufgabe zugrunde, ein optimiertes Verfahren zur bildbasierten automatischen Belichtungskorrektur im Zusammenhang mit bei Haus-Kommunikationssystemen gelieferten Video-Informationen anzugeben.

Diese Aufgabe wird erfindungsgemäß durch ein Verfahren zur bildbasierten automatischen Belichtungskorrektur eines Haus-Kommunikationssystems gelöst, welches als Systemkomponenten eine Türstation und mindestens eine über einen Bus daran angeschlossene Wohnungsstation aufweist,
● wobei eine Kamera der Türstation Bilder von Personen aufnimmt, welche sich vor der Türstation aufhalten,
● wobei diese Bilder im Display der Wohnungsstation zur Anzeige gebracht werden,
● wobei das von der Kamera erzeugte analoge oder digitale Bildsignal mit Hilfe eines Regionsdetektors ausgewertet wird, welcher ein oder mehrere relevante Bildbereiche identifiziert,
● wobei ein Helligkeitsmesswerterzeuger die Belichtungsqualität mindestens eines interessierenden Bildbereichs auf Basis der Ergebnisse des Regionsdetektors ermittelt,
● wobei eine Regeleinheit aus einem vorgegebenen Sollwert und dem vom Helligkeitsmesswerterzeuger erzeugten und gelieferten Istwert Stellgrößen ermittelt, welche die Belichtungsparameter der Kamera iterativ während der Bildaufnahme optimiert.

Die mit der Erfindung erzielbaren Vorteile liegen insbesondere in der verbesserten Bildqualität mittels eines einfachen und komfortablen Verfahrens zur Helligkeitsanpassung. Aus der üblicherweise für die digitale Übertragung der Bilddaten notwendigen MPEG-Codierung können beispielsweise die erforderlichen Informationen für regionale Helligkeitsanpassung mittels des Regionsdetektors leicht gewonnen werden, ohne viel zusätzliche Rechenleistung zu benötigen. Das vorgeschlagene Belichtungskorrekturverfahren führt insbesondere bei unterschiedlichen Beleuchtungsbedingungen für den Vordergrund (mit der sich vor der Türstation aufhaltenden Person) und den Hintergrund zu verbesserten Ergebnissen, d. h. einer deutlicheren Darstellung der Person auf dem von der Türstation zur Wohnungsstation übertragenen Videobild. Steht eine Person beispielsweise im schattigen Bereich, während der Bildhintergrund direkt beleuchtet ist, führt das vorgeschlagene Belichtungskorrekturverfahren zu einer Aufhellung der Person. Gleiches gilt für Gegenlichtsituationen.

Dabei können die mit Hilfe der Regeleinheit ermittelten Stellgrößen der Kamera unmittelbar zugeführt werden, d. h. es wird in diesem Fall eine globale Helligkeitsanpassung in der Kamera vorgenommen. In diesem Zusammenhang können gemäß einer Weiterbildung zusätzliche Regionsinformationen vom Regionsdetektor unmittelbar an die Kamera übertragen werden, d. h. es wird in diesem Fall eine regionale Helligkeitsanpassung in der Kamera vorgenommen.

Abweichend hiervon können die mit Hilfe der Regeleinheit ermittelten Stellgrößen einer Bildverarbeitung zugeführt wird, welche eingangsseitig das von der Kamera erzeugte Bildsignal empfängt, d. h. es wird in diesem Fall eine globale Helligkeitsanpassung in der Bildverarbeitung vorgenommen. In diesem Zusammenhang können gemäß einer Weiterbildung zusätzlich Regionsinformationen vom Regionsdetektor an die Bildverarbeitung übertragen werden, d. h. es wird in diesem Fall eine regionale Helligkeitsanpassung in der Bildverarbeitung vorgenommen.

Optional kann bei allen Ausführungsformen eine Licht-Auswerteeinheit einerseits den vom Helligkeitsmesswerterzeuger erzeugten und gelieferten Istwert und andererseits die Stellgröße der Regeleinheit empfangen und auf Basis dieser Daten eine Lichtquelle zur Verbesserung der Beleuchtungssituation (Beleuchtung der Türstation respektive der sich davor aufhaltenden Personen) ansteuern.

Beim Regionsdetektor kann zur Identifikation der relevanten Bildbereiche vorteilhaft
● ein Personenerkennungsverfahren, wie Kopf-Schulter-Detektion oder Gesichts-Detektion zur Anwendung gelangen oder
● ein bildbasiertes Verfahren zur Hintergrundsubtraktion zur Anwendung gelangen oder
● ein Verfahren zur Bewegungserkennung zur Anwendung gelangen, wobei von der Annahme ausgegangen wird, dass die vor der Türstation befindliche Person ein im Vergleich zum Hintergrund charakteristisches Bewegungsverhalten aufweist, beispielsweise im Unterschied zum Hintergrund nicht gänzlich stillsteht.

Bei einem Haus-Kommunikationssystem, bei welchem Regeleinheit und/oder Regionsdetektor und/oder Helligkeitsmesswerterzeuger außerhalb der Türstation in mindestens einer anderen Systemkomponente (Wohnungsstation) integriert ist, wird vorteilhaft mindestens eine Ausgabegröße, wie Stellgröße, und/oder Regionsinformation und/oder Istwert über den Bus zugeführt.

Die Erfindung wird nachstehend an Hand der in der Zeichnung dargestellten Ausführungsbeispiele erläutert. Es zeigen:
- Fig. 1: eine Systemübersicht eines Haus-Kommunikationssystems,
- Fig. 2: eine erste Ausführungsform einer Türstation mit globaler Helligkeitsanpassung in der Kamera,
- Fig. 3: eine zweite Ausführungsform einer Türstation mit regionaler Helligkeitsanpassung in der Kamera,
- Fig. 4: eine dritte Ausführungsform einer Türstation mit globaler Helligkeitsverarbeitung in der Bildverarbeitung,
- Fig. 5: eine vierte Ausführungsform einer Türstation mit regionaler Helligkeitsanpassung in der Bildverarbeitung.

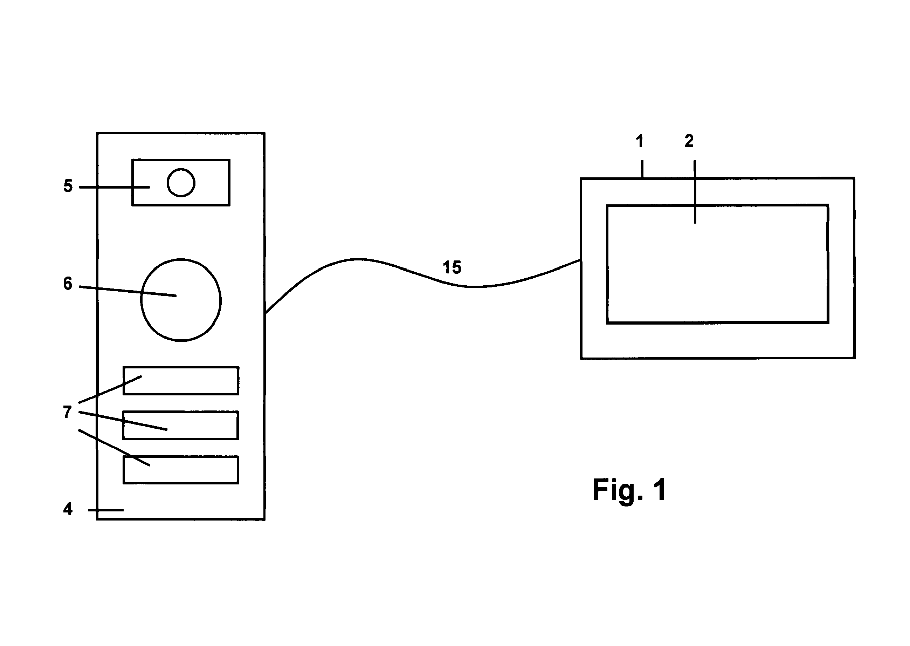

In Fig. 1 ist eine Systemübersicht eines Haus-Kommunikationssystems dargestellt. Als Systemkomponenten sind zu erkennen:
● eine ein Display 2 aufweisende Wohnungsstation 1,
● eine Türstation 4, welche eine Kamera 5, einen Lautsprecher 6 und mindestens einen Klingelknopf 7 aufweist.

Beim betrachteten Haus-Kommunikationssystem kann lediglich eine einzige Wohnungsstation vorgesehen sein, es können jedoch auch zwei, drei oder mehr Wohnungsstation als Systemkomponenten vorhanden sein, wobei sich die Anzahl der Klingelknöpfe der Türstation nach der Anzahl der Wohnungsstationen richtet. Ein Bus 15 dient zur Verbindung der Türstation 4 mit der Wohnungsstation 1 respektive den Wohnungsstationen.

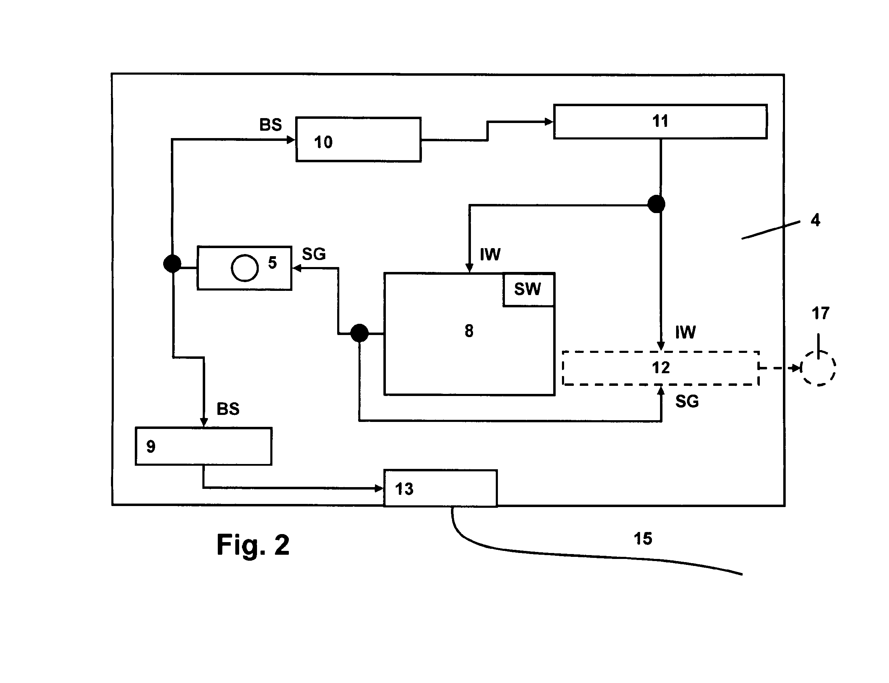

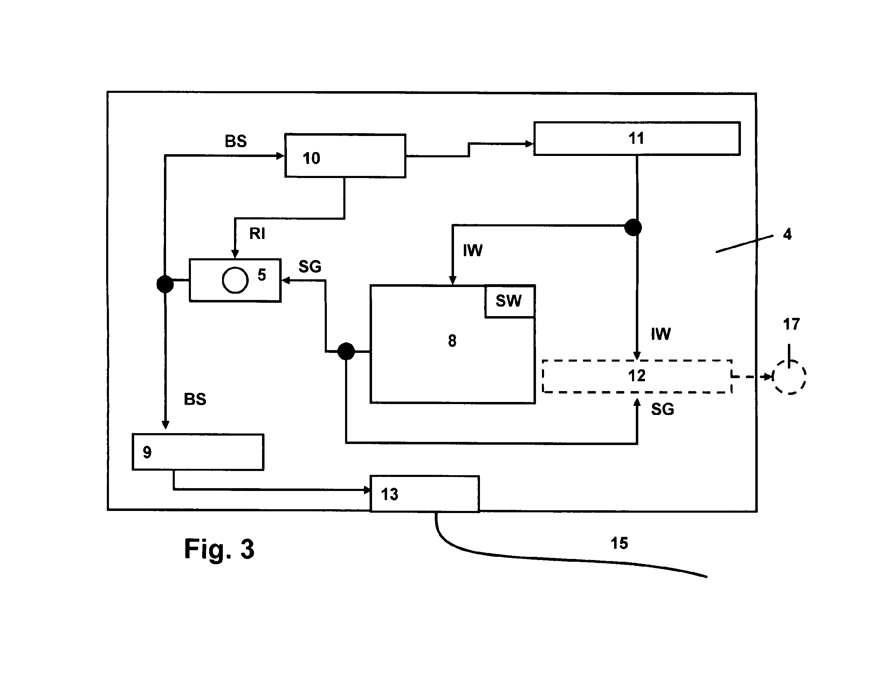

In Fig. 2 ist eine erste Ausführungsform einer Türstation mit globaler Helligkeitsanpassung in der Kamera dargestellt. Es ist eine Kamera 5 gezeigt, deren analoge oder digitale Bildsignale BS einer Bildverarbeitung 9 sowie einem Regionsdetektor 10 zugeführt werden. Die Bildverarbeitung 9 ist ausgangsseitig mit einem Bus-Interface 13 verbunden, an welches der Bus 15 angeschlossen ist. Die Ausgangssignale des Regionsdetektors 10 werden einem Helligkeitsmesswerterzeuger 11 zugeleitet. Ausgangsseitig gibt der Helligkeitsmesswerterzeuger 11 einen Istwert IW als Ausgabegröße an eine optionale Licht-Auswerteeinheit 12 sowie an eine Regeleinheit 8 ab. Der Regeleinheit 8 liegt andererseits ein Sollwert SW vor. Ausgangsseitig gibt die Regeleinheit 8 eine Stellgröße SG als Ausgabegröße an die optionale Licht-Auswerteeinheit 12 ab. Die optionale Licht-Auswerteeinheit 12 steuert ausgangsseitig eine optionale Lichtquelle 17 an. Diese Ausführungen zur Fig. 2 sind auch für die weiteren Ausführungen gemäß den Figuren 3, 4, 5 gültig.

Das Besondere der Ausführungsform gemäß Fig. 2 besteht darin, dass die Regeleinheit 8 die Stellgröße SG zusätzlich an die Kamera 5 abgibt.

In Fig. 3 ist eine zweite Ausführungsform einer Türstation mit regionaler Helligkeitsanpassung in der Kamera dargestellt. Das Besondere der Ausführungsform gemäß Fig. 3 besteht darin, dass zum Einen die Regeleinheit 8 die Stellgröße SG zusätzlich an die Kamera 5 abgibt und dass zum Anderen der Regionsdetektor 10 eine Regionsinformation RI als Ausgabegröße an die Kamera 5 abgibt.

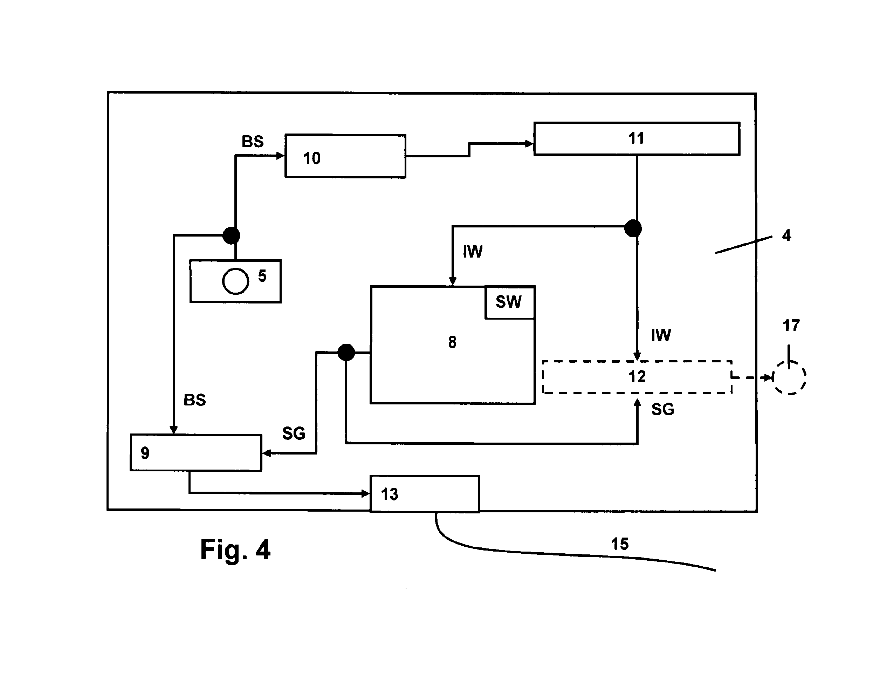

In Fig. 4 ist eine dritte Ausführungsform einer Türstation mit globaler Helligkeitsverarbeitung in der Bildverarbeitung dargestellt. Das Besondere der Ausführungsform gemäß Fig. 4 besteht darin, dass die Regeleinheit 8 die Stellgröße SG zusätzlich an die Bildverarbeitung 9 abgibt.

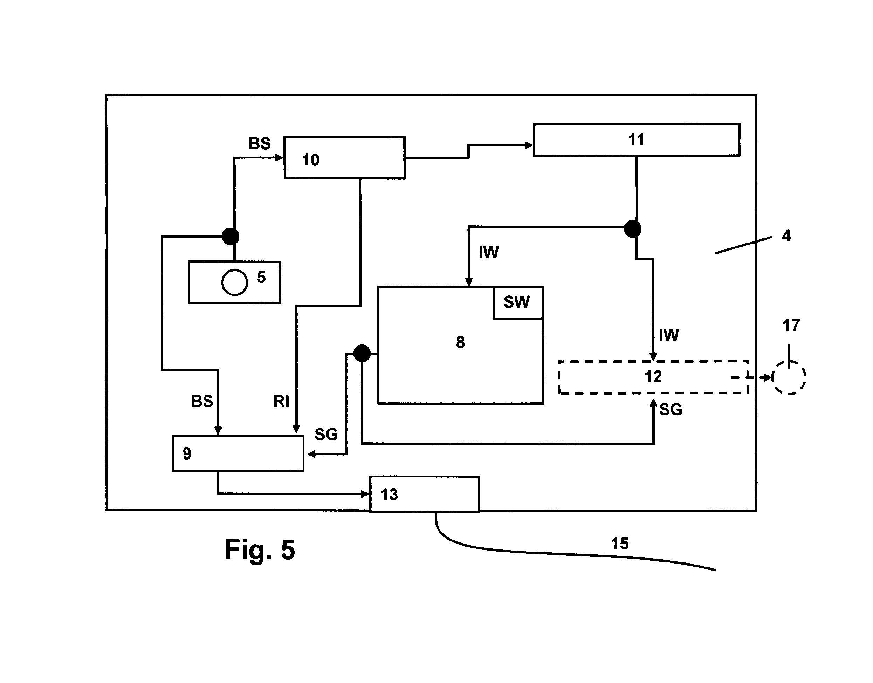

In Fig. 5 ist eine vierte Ausführungsform einer Türstation mit regionaler Helligkeitsanpassung in der Bildverarbeitung dargestellt. Das Besondere der Ausführungsform gemäß Fig. 5 besteht darin, dass zum Einen die Regeleinheit 8 die Stellgröße SG zusätzlich an die Bildverarbeitung 9 abgibt und dass zum Anderen der Regionsdetektor 10 die Regionsinformation RI an die Bildverarbeitung 9 abgibt.

Nach der vorstehenden Beschreibung der schaltungstechnischen Gemeinsamkeiten und Unterschiede der unterschiedlichen Ausführungsformen nachfolgend Erläuterungen zum vorgeschlagenen Verfahren zur bildbasierten automatischen Belichtungskorrektur.

Zur Verbesserung der Bildqualität bei der Aufnahme durch die Kamera 5 werden die Belichtungsparameter hinsichtlich der im gegebenen Szenario interessierenden Bildbereiche optimiert, insbesondere diejenigen Bildbereiche, welche der in der Regel schlecht ausgeleuchteten Person im Vordergrund des Bildes zugeordnet sind.

Das Bildsignal BS der Kamera 5 wird zu diesem Zweck vom Regionsdetektor 10 in einem ersten Schritt ausgewertet, der ein oder mehrere relevante Bildbereiche identifiziert, welche die Person oder Personen im Vordergrund betrifft / betreffen. Auf Basis der Ergebnisse des Regionsdetektors 10 ermittelt der Helligkeitsmesswerterzeuger 11 die Belichtungsqualität dieser interessierenden Bildbereiche. Dies geschieht durch Anwendung der allgemein bekannten Verfahren zur automatischen Belichtungseinstellung auf Basis der durchschnittlichen Helligkeit, jedoch nicht über das gesamte Bild, wie üblich, sondern jeweils über die interessierenden Bildbereiche respektive unter besonderer Gewichtung der im ersten Schritt ermittelten Bildbereiche.

In der Folge kann die Regeleinheit 8 die Belichtungsparameter der Kamera 5 mittels verschiedener Stellgrößen SG iterativ während der Bildaufnahme optimieren, siehe die Ausführungsformen gemäß den Figuren 2 und 3 ― siehe Pfad mit Stellgröße SG von Regeleinheit 8 zu Kamera 5 ― oder auch die Beleuchtungssituation mittels der optionalen Licht-Auswerteeinheit 12 zur Steuerung der Lichtquelle 17 verbessern, siehe die Ausführungsformen gemäß den Figuren 2, 3, 4, 5 ― siehe Pfad mit Stellgröße SG von Regeleinheit 8 zu Licht-Auswerteeinheit 12 inklusive Ansteuerung der Lichtquelle 17 abhängig vom IW/SG-Vergleich.

Ist eine Kamera 5 verbaut, die regionale Belichtungseinstellungen erlaubt, kann das Verfahren dahin gehend erweitert werden, dass durch den beschriebenen Prozess die Aufnahmeparameter für die unterschiedlichen Bildbereiche (Vorder- und Hintergrund) getrennt von einander optimiert werden. In diesem Fall werden die vom Regionsdetektor 10 ermittelten Regionsinformationen RI vom Regionsdetektor 10 zusätzlich an die Kamera 5 übertragen ― siehe Pfad mit Regionsinformation RI vom Regionsdetektor 10 zur Kamera 5 gemäß Figur 3.

Für Kameras 5, die keine Änderungen der Belichtungseinstellungen erlauben oder benötigen, erfolgt die Optimierung der Bildqualität in der Bildverarbeitung 9 vor der Weiterleitung der Daten zum Bus-Interface 13. Analog zu den beiden oben geschilderten Verfahren, kann hier eine Optimierung wahlweise
● global erfolgen, wie dies in Fig. 4 gezeigt ist ― siehe Pfad mit Stellgröße SG von der Regeleinheit 8 zur Bildverarbeitung 9 ― als auch
● regional erfolgen, wie dies in Fig.5 gezeigt ist, ― siehe Pfad mit Stellgröße SG von der Regeleinheit 8 zur Bildverarbeitung 9 sowie Pfad mit Regionsinformation vom Regionsdetektor 10 zur Bildverarbeitung 9.

Zur Erkennung der relevanten Bildbereiche mit Hilfe des Regionsdetektors 10 können verschiedene Verfahren Anwendung finden:
-- Verfahren zur Personenerkennung (z.B. Kopf-Schulter-Detektoren, Gesichtsdetektoren)
-- Bildbasierte Verfahren zur Hintergrundsubtraktion und
-- Verfahren zur Bewegungserkennung. Neben obigen Verfahren kann eine Bewegungserkennung auch auf Basis der bereits implizit vorliegenden Bewegungsinformationen in einem MPEG-kodierten Videostream erfolgen. Dies ermöglicht den Einsatz des beschriebenen Belichtungskorrekturverfahrens auch in eingebetteten Systemen mit begrenzten Hardwareressourcen und ohne zusätzliche Hardware.

Bei den bekannten Komprimierungsverfahren für Bewegtbilder (z.B. MPEG) werden zur Reduzierung der Datenmenge verschiedene Bildtypen verwendet. In regelmäßigen Abständen werden Vollbilder (I-Frames) codiert, diese enthalten die Bildinformation des kompletten Bildinhalts. Um die Datenrate entsprechend zu vermindern werden zwischen den Vollbildern nur Differenzbilder (P-Frames oder B-Frames) codiert. Diese Bilder beinhalten im Wesentlichen nur die Differenzen zu vorausgegangenen oder zu kommenden Frames.

Erfindungsgemäß wird davon ausgegangen, dass das Gesicht/Oberkörper einer Person während des Gesprächs von Außensprechstelle zur Innensprechstelle nicht gänzlich stillsteht, und ein im Vergleich zum Hintergrund charakteristisches Bewegungsverhalten aufweist. Diese Bewegungsinformationen finden sich in den Differenzbildern wieder (Motion-Flow Vektoren). Eine Auswertung dieser Vektoren erlaubt die exakte Bestimmung der relevanten Bildbereiche, für die eine Anpassung der Bildhelligkeit primär erfolgen soll.

Alternativ kann in einem einfacheren Ansatz auf die exakte Bestimmung des relevanten Bildbereichs verzichtet werden, in dem aus den Vektoren lediglich ein Mittelpunkt bestimmt wird. In einer definierbaren kreisförmigen oder ovalen Umgebung um den Mittelpunkt wird dann die Helligkeit entsprechend angepasst.

### Bezugszeichenliste

- 1: Wohnungsstation
- 2: Display
- 3: ―
- 4: Türstation
- 5: Kamera
- 6: Lautsprecher
- 7: Klingelknöpfe
- 8: Regeleinheit
- 9: Bildverarbeitung
- 10: Regionsdetektor
- 11: Helligkeitsmesswerterzeuger
- 12: Licht-Auswerteeinheit
- 13: Bus-Interface
- 14: ―
- 15: Bus
- 16: ―
- 17: Lichtquelle

- BS: Bildsignal
- IW: Istwert
- RI: Regionsinformation
- SG: Stellgröße
- SW: Sollwert

## Patentansprüche

1. Verfahren zur bildbasierten automatischen Belichtungskorrektur eines Haus-Kommunikationssystems, welches als Systemkomponenten eine Türstation (4) und mindestens eine über einen Bus (15) daran angeschlossene Wohnungsstation (1) aufweist,
● wobei eine Kamera (5) der Türstation (4) Bilder von Personen aufnimmt, welche sich vor der Türstation aufhalten,
● wobei diese Bilder im Display (2) der Wohnungsstation (1) zur Anzeige gebracht werden,
● wobei das von der Kamera (5) erzeugte analoge oder digitale Bildsignal (BS) mit Hilfe eines Regionsdetektors (10) ausgewertet wird, welcher ein oder mehrere relevante Bildbereiche identifiziert,
● wobei ein Helligkeitsmesswerterzeuger (11) die Belichtungsqualität mindestens eines interessierenden Bildbereichs auf Basis der Ergebnisse des Regionsdetektors (10) ermittelt,
● wobei eine Regeleinheit (8) aus einem vorgegebenen Sollwert (SW) und dem vom Helligkeitsmesswerterzeuger (11) erzeugten und gelieferten Istwert (IW) Stellgrößen (SG) ermittelt, welche die Belichtungsparameter der Kamera (5) iterativ während der Bildaufnahme optimiert.

2. Verfahren nach Anspruch 1, **dadurch gekennzeichnet, dass** die Stellgrößen (SG) der Kamera (5) unmittelbar zugeführt werden.

3. Verfahren nach Anspruch 2, **dadurch gekennzeichnet, dass** zusätzlich Regionsinformationen (RI) vom Regionsdetektor (10) an die Kamera (5) übertragen werden.

4. Verfahren nach Anspruch 1, **dadurch gekennzeichnet, dass** die Stellgrößen (SG) einer Bildverarbeitung (9) zugeführt werden, welche eingangsseitig das von der Kamera (5) erzeugte Bildsignal (BS) empfängt.

5. Verfahren nach Anspruch 4, **dadurch gekennzeichnet, dass** zusätzlich Regionsinformationen (RI) vom Regionsdetektor (10) an die Bildverarbeitung (9) übertragen werden.

6. Verfahren nach mindestens einem der vorstehenden Ansprüche,
**dadurch gekennzeichnet, dass** eine Licht-Auswerteeinheit (12) den vom Helligkeitsmesswerterzeuger (11) erzeugten und gelieferten Istwert (IW) und die Stellgröße (SG) der Regeleinheit (8) empfängt und auf Basis dieser Daten eine Lichtquelle (17) zur Verbesserung der Beleuchtungssituation ansteuert.

7. Verfahren nach mindestens einem der vorstehenden Ansprüche,
**dadurch gekennzeichnet, dass** beim Regionsdetektor (10) ein Personenerkennungsverfahren, wie Kopf-Schulter-Detektion oder Gesichts-Detektion zur Anwendung gelangt.

8. Verfahren nach mindestens einem der vorstehenden Ansprüche,
**dadurch gekennzeichnet, dass** beim Regionsdetektor (10) ein bildbasiertes Verfahren zur Hintergrundsubtraktion zur Anwendung gelangt.

9. Verfahren nach mindestens einem der vorstehenden Ansprüche,
**dadurch gekennzeichnet, dass** beim Regionsdetektor (10) ein Verfahren zur Bewegungserkennung zur Anwendung gelangt, wobei von der Annahme ausgegangen wird, dass die vor der Türstation (4) aufhaltende Person ein im Vergleich zum Hintergrund charakteristisches Bewegungsverhalten aufweist.

10. Verfahren nach mindestens einem der vorstehenden Ansprüche, wobei Regeleinheit (8) und/oder Regionsdetektor (10) und/oder Helligkeitsmesswerterzeuger (11) außerhalb der Türstation (4) in mindestens einer anderen Systemkomponente integriert ist, **dadurch gekennzeichnet, dass** mindestens eine Ausgabegrö-βe, wie Stellgröße (SG), und/oder Regionsinformation (RI) und/oder Istwert (IW) über den Bus (15) zugeführt wird.
